(19)

Europäisches Patentamt
European Patent Office
Office européen des brevets

(11) **EP 4 430 132 B1**

(12) **EUROPEAN PATENT SPECIFICATION**

(45) Date of publication and mention
of the grant of the patent:
**02.04.2025 Bulletin 2025/14**

(21) Application number: **22840280.6**

(22) Date of filing: **23.12.2022**

(51) International Patent Classification (IPC):
**C09D 11/105** (2014.01)    **C09D 11/033** (2014.01)
**C09D 7/40** (2018.01)    **C09D 7/20** (2018.01)

(52) Cooperative Patent Classification (CPC):
**C09D 7/20; C09D 7/40; C09D 11/033; C09D 11/105**

(86) International application number:
**PCT/GB2022/053381**

(87) International publication number:
**WO 2023/118897 (29.06.2023 Gazette 2023/26)**

(54) **MINERAL OIL-FREE INTAGLIO INK**

MINERALÖLFREIE TIEFDRUCKFARBE

ENCRE HÉLIO EXEMPTE D'HUILE MINÉRALE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.12.2021 US 202163293671 P
12.01.2022 GB 202200325**

(43) Date of publication of application:
**18.09.2024 Bulletin 2024/38**

(73) Proprietor: **Sun Chemical B.V.
1382 LV Weesp (NL)**

(72) Inventor: **FORRESTER, Vincent John
Harlow Essex CM18 6NG (GB)**

(74) Representative: **Carpmaels & Ransford LLP
One Southampton Row
London WC1B 5HA (GB)**

(56) References cited:
**EP-A2- 0 745 652        WO-A1-2015/068290
WO-A1-2019/129625      CN-A- 101 250 352
KR-A- 20160 080 339    US-A- 4 404 251**

• **DATABASE WPI Week 201655, Derwent World
Patents Index; AN 2016-50051W**

Remarks:
The file contains technical information submitted
after the application was filed and not included in this
specification

**Description**

## BACKGROUND OF THE INVENTION

The present invention is defined by the claims and describes a water wipe security intaglio printing ink composition comprising as a principal component bio-renewable iso-alkane vegetable oil-based solvent, which in combination with other constituents produces a mineral oil-free ink with improved sustainability and environmental impact footprint when compared to existing formulations designed for the same application.

There is growing concern over sustainability and the environmental impact of petroleum based mineral oils which are used as solvents within printing inks to adjust rheological properties and ink setting speeds and drying times. Mineral oil is widely known and may be understood to refer to refined petroleum-based hydrocarbons. A typical intaglio ink will contain up to 15% of mineral oil distillate such as Exxsol D60 (de-aromatised, low aromatic hydrocarbon solvent, distillation range 187-216°C). This has created the need for printing inks, especially intaglio ink compositions, which contain reduced amounts of mineral oil and more preferably are free of mineral oil and not classified as VOC under 2010/75/EC directive and contain less than 1% VOC under 2004/42/EC directive, and are especially suited for the intaglio printing of security documents such as banknotes, passports and the like.

Modern intaglio ink formulations need to fulfil a complex range of requirements, which are significantly different to those for other paste inks used in offset and letterpress printing.

In the intaglio printing process, a rotating engraved steel cylinder, carrying a pattern or image to be printed, and heated to a temperature of the order of 80°C, is supplied with ink by one or more schablones. Subsequent to the inking, any excess of ink on the plain surface of the printing cylinder is wiped off by a rotating wiping cylinder. The remaining ink in the engraving of the printing cylinder is transferred under pressure onto the substrate to be printed, which may be a paper, polymeric or hybrid material in sheet or reel form, while the wiping cylinder is cleaned by a wiping solution, which is alkaline in nature and composed of mainly demineralised water normally containing between 0.6 to 1.0% sodium hydroxide (caustic soda) and approximately 0.5% of sulphonated castor oil.

One of the distinguishing features of the intaglio printing process is that the film thickness of the ink transferred to the substrate can be varied from a few micrometers to several tens of micrometers by a correspondingly engraved printing plate. This ability to vary the film thickness is a most desirable feature of the intaglio printing process and the tactile feel of these relief effects is a strong security feature.

The pronounced relief of the intaglio printing accentuates the problem of ink drying and "set-off", which is the unwanted transfer of ink from one printed sheet to the reverse side of the sheet lying on top of it in a stack. In cases of severe "set-off", the sheets can stick together. The sticking together of paper sheets due to ink set-off is called "blocking". Separation of blocked sheets can result in severe damage to one or both. Hence, solvents which are advertised as being suitable for generic "inks" may not be suitable for intaglio inks in particular, due to the specific technical requirements for intaglio inks.

Intaglio ink formulations need to be able to print cleanly at high film thicknesses on intaglio presses, particularly on high speed sheetfed intaglio printing presses without causing "set off" in the sheet stack.

The factors influencing ink drying and "set-off" are determined by the printing ink formulation, the engraving depth and evenness, the printing conditions, the printing substrate, the number of stacked sheets per pile, the time between printing and handling of the piles and the way that the printed piles of paper are handled after printing.

The problem of improving drying and reducing set-off in oxidatively curing intaglio inks has been addressed historically in the art in several ways but mainly include the use of mineral oil solvents with relatively low boiling points that readily evaporate on the printing plate and from the ink film after printing.

Intaglio ink formulations require good solubility in intaglio wiping solutions which are used in the water wipe intaglio printing process to ensure effective wiping of chrome plated nickel printing plates with PVC plastisol wiping rollers. Hence, water wipe intaglio inks may be understood to mean inks which are suitable for use in intaglio printing processes that use alkaline wiping solutions. For example, a water wipe intaglio ink may be graded with a score of at least 2, preferably at least 3, when testing according to the Wiping Solution Solubility test using Wiping Solution A defined in the examples.

Intaglio ink formulations preferably have excellent durability and pass stringent chemical and physical resistance tests. They would preferably have a long shelf-life and be suitable for drying with siccative driers. These properties are achieved by using varnish systems which are highly tailored for the application and utilize polymeric materials with a wide range of molecular weight and functionality. Intaglio printing inks for security printing are normally composed of an oxidatively curable material, such as an alkyd resin or a modified alkyd resin, a high acid value phenolic resin, pigment, inorganic fillers, rheology modifiers, waxes, emulsifying agent (if required), siccative driers and low boiling point mineral oil distillate to produce a finished product that will adequately solubilise in the alkaline wiping solution on press, exhibit good drying and anti-setoff properties and possess the required chemical resistance specified for that particular document or banknote by the end user.

Intaglio ink formulations are traditionally characterized by tack, viscosity and drying time measurements which are well known to those skilled in the art. It is preferred that any change made to one component of the varnish system does not adversely affect these parameters.

Citation or identification of any document in this application is not an admission that such represents prior art to the present invention.

A number of different approaches can be found in the prior art where renewable alternatives have been used in printing inks for the offset printing process. However, these are based on bio-renewable solvents in the form of fatty acid esters of vegetable oils such as rapeseed oil (see JP5467556B2). WO 2015/024966 refers to fatty acid esters of isosorbide as solvents for offset inks. These fatty acid ester solvents used in the formulation of offset inks are high solvency, non-toxic liquids which are virtually non-volatile when compared to their traditional printing ink distillate counterparts. This renders them unsuitable for use in intaglio inks as the high solvency power results in an unacceptable reduction in viscosity and printability and the slow evaporation rate means that the inks do not set or dry quickly, resulting in unacceptable levels of "set-off".

There have been attempts to produce more environmentally sustainable intaglio inks by reducing the amount of environmentally damaging mineral oil solvents required in the formulations. For example, US6815474B2 refers to a water-based intaglio printing ink having a) an epoxy resin ester reacted with an unsaturated monobasic acid and a reactive monomer, b) a glycol and/or glycol ether c) a pigment, d) a monoalkanolamine, e) a drier and f) water. However, these efforts to reduce the VOC content of the intaglio inks, or increase the water tolerance of such inks, have failed to be widely commercially adopted due to reduced performance compared with conventional intaglio inks.

Other approaches have been used to increase the environmental sustainability of intaglio inks which are based on the use of vegetable oils such as linseed oil, tung oil, dehydrated castor oil, soybean oil or esterified soya bean oils. In CN101386724A the use of vegetable oils, varnishes and high boiling point solvents preferably with a boiling point higher than 210°C, in a water wipeable, non-smearing intaglio ink composition are mentioned.

CN101250352, refers to replacing the mineral oil solvent with soya bean oil which is reacted with other materials at a temperature of 230-300°C to form into ink varnishes. A small amount of free soya bean oil may be used at the end of the production process to adjust the final viscosity.

US5569701 refers to a soybean oil-based intaglio ink comprising alkyds synthesised at least in part from soybean oil and tung oil, and/or linseed oil. The soybean oil is reacted with other materials to form an alkyd, so it is not present as a free material. The intaglio ink also contains 0 to 12 % of mineral oil.

EP0745652A2 relates to an intaglio ink comprising a varnish comprising an alkydmodified soybean oil and method for producing the same.

WO2019/129625A1 relates to a renewable solvent composition having a high i-paraffin content of at least 91.0 wt.% and a boiling point in a range of from 150°C to 260°C.

US4404251A relates to a pressure-sensitive, carbonless copying system and to a process for the production of pressure-sensitive, carbonless copying system.

KR1020160080339A relates to a water-wiping intaglio ink and manufacturing method thereof.

CN101250352A relates to a gravure ink and a binder thereof, in particular to a soybean oil-based gravure ink and a binder thereof.

WO2015/068290A1 relates to an infrared absorptive intaglio printing ink, and more particularly to an infrared absorbing intaglio printink ink for preventing forgery.

It is an object of the present invention to overcome the shortcomings of the prior art, in particular by disclosing intaglio ink compositions which do not require the use of environmentally damaging high boiling point petroleum based hydrocarbons within the formulation, while still being in the required viscosity range required by the intaglio printing process, and showing effective drying and setting properties to avoiding significant set off between sheets when stacked in a printing press delivery pile.

It is a further object of the invention to provide preferred embodiments which exhibit equivalent or improved chemical resistance properties when compared to the low boiling point mineral oil distillate ink formulations currently being used.

Another object of the invention is to provide preferred embodiments which exhibit equivalent or improved solubility characteristics in a wide range of sodium hydroxide containing wiping solutions when compared to the low boiling point mineral oil distillate ink formulations currently being used.

## DETAILED DESCRIPTION

The invention provides a varnish which is suitable for formulating intaglio inks, comprising a bio-renewable iso-alkane vegetable oil-based solvent, oxidatively curable materials, and high acid value resins having an acid number of 100-160 mgKOH/g, wherein the varnish is mineral oil-free; wherein the oxidatively curable materials comprise an epoxy ester and/or a urethane modified alkyd.

The invention also provides a water wipe security intaglio printing ink composition comprising a bio-renewable iso-alkane vegetable oil-based solvent, as oxidatively curable material an epoxy ester and/or a urethane modified alkyd, and a high acid value resin having an acid number of 100-160 mgKOH/g; wherein the ink is mineral oil-free.

The invention also provides a method of intaglio printing security documents such as banknotes and passports on paper, polymeric or hybrid substrate using an ink of the invention.

The invention also provides an intaglio ink comprising a varnish of the invention, optionally further comprising additional bio renewable solvent.

The invention also provides a printed article obtained from printing an ink of the invention, optionally wherein the article is a security document.

The invention also provides a method of making a varnish which is suitable for formulating intaglio inks, the method comprising obtaining a bio-renewable iso-alkane vegetable oil-based solvent from 100% certified vegetable oil feedstocks, and forming a varnish comprising the bio-renewable iso-alkane vegetable oil-based solvent, oxidatively curable materials, and high acid value resins having an acid number of 100-160 mgKOH/g, wherein the varnish is mineral oil-free;

wherein the oxidatively curable materials comprise an epoxy ester and/or a urethane modified alkyd; optionally wherein the method further comprises:

(a) heating the oxidatively curable materials and high acid value resins under inert conditions to form a mixture, wherein said oxidatively curable materials comprise an epoxy ester and/or a urethane modified alkyd, and
(b) adding the bio-renewable iso-alkane vegetable oil-based solvent to the mixture.

The invention also provides a method of making a mineral oil-free intaglio ink, the method comprising making a varnish by following either of the above-mentioned methods, and making an intaglio ink comprising the varnish.

We have found that iso-alkane type of vegetable oils can be used to replace petroleum-based solvents within intaglio formulations despite having a lower solvency power and higher boiling point when compared to the traditional mineral oil distillates used in the formulation of these types of printing inks. An iso-alkane may be understood as any branched-chain alkane, but especially one having a methyl group attached to the penultimate carbon atom of the main chain. The iso-alkanes are obtained from 100% certified vegetable origin feedstocks, which can be understood to mean they are bio-renewable, but which are then hydrogenated and distilled to give products with a narrow cut of carbon chain lengths and narrow boiling ranges. The carbon chain length of the iso-alkane may be C10-C20, preferably C13-C18. The iso-alkane may have an initial boiling point of 120-300°C, 135-250°C, or 200-250°C. The iso-alkane may have a final boiling point of 160-350°C, 180-350°C, 180-280°C, or 200-280°C. The difference between the initial and final boiling point of the iso-alkane may be less than 75°C, less than 50°C, or preferably less than 35°C. Boiling points are typically reported by commercial suppliers. Boiling points may be measured according to ASTM D86-18, e.g. at 101.3kPa. Iso-alkane vegetable oil-based solvents are available from commercial suppliers.

In a preferred embodiment of the invention, the combination of bio renewable iso-alkanes of vegetable oil with a carbon chain length of C13-C18 with a naturally occurring drying oil such as refined soya bean oil, refined linseed oil or tung oil enables the formulation of mineral oil-free intaglio inks which are not classified as containing VOC under European Regulation with the correct viscosity and tack, which are suitable for security printing on various substrates, especially banknote substrates. Another advantage of these formulations is that they can perform well in press wiping solutions with lower NaOH concentrations without affecting the quality of print or causing any increase in intaglio plate wear on the press. An alkaline wiping solution based on sodium hydroxide and a surfactant/detergent in demineralized water is used in the intaglio printing process to remove/wipe any excess ink from the engraved printing cylinder during printing. Once in the wiping solution, the waste ink can be treated in the press waste treatment facility. The press wiping solution, which has a direct impact on the environment, can contain 1% or more of sodium hydroxide, therefore reducing the amount used will be environmentally more advantageous and desirable.

The varnishes and inks may be substantially free of water, for example comprising less than 5 wt% water, or are free from water.

The varnishes and inks are preferably not classified as VOC under 2010/75/EC directive. Alternatively or in addition, the varnishes and inks preferably contain less than 1% VOC under 2004/42/EC directive, for example less than 10 g/l VOC.

The ink may have a viscosity at 40°C of 10-20 Pa·s, preferably 12-18 Pa·s. The varnish may have a viscosity at 25°C of 15-70 Pa·s, preferably 25-60 Pa·s. Viscosity ma be measured according to ASTM D4287-00. For example, viscosity may be measured with a viscometer, such as a CAP 2000+ Viscometer available from Brookfield Engineering, using a 0.30mL of sample of product, where the equipment setting is Spindle 09 at a speed of 50rpm at 25°C for a varnish and 40°C for an ink.

The invention includes a method of making a mineral oil-free varnish suitable for formulating intaglio inks, the method comprising:

(a) heating oxidatively curable materials and high acid value resins having an acid number of 100-160 mgKOH/g under inert conditions to form a mixture, wherein said oxidatively curable materials comprise an epoxy ester and/or a urethane modified alkyd, and

(b) adding a bio-renewable iso-alkane vegetable oil-based solvent to the mixture.

The inert conditions are typically under an inert atmosphere such as nitrogen, argon, or carbon dioxide. In this way, the mixture is prevented from reacting with oxygen in the air.

The heating in step (a) may be to 140-200 °C or 170-190 °C. Typically the heating results in the high acid value resins (which are often obtained in solid form) dissolving in the oxidatively curable materials. Thus, step (a) may include agitating the oxidatively curable materials and the high acid value resins, optionally for at least 1 minute, such as from 5 minutes to 1 hour.

The materials heated in step (a) may be free from vegetable-based solvents, and may consist of oxidatively curable materials and high acid value resins. Advantageously, it has been found that the use of vegetable oil-based bio-renewable iso-alkane as the solvent in step (b) avoids the need to include solvents in the heating step (a). This leads to a safer process since it avoids the need to add a solvent, which may be volatile, to a reaction vessel at high temperature.

The mixture may be cooled before step (b) is performed, optionally by at least 15 °C and/or to 170 °C or less. In this way, the risk of the solvent vapor igniting is minimized. Step (b) may be performed under inert conditions, again minimizing the risk of the solvent vapor igniting.

To facilitate the formation of the varnish step (b) may include agitating the mixture comprising the bio-renewable iso-alkane vegetable oil-based solvent.

After step (b) the mixture comprising the bio-renewable iso-alkane vegetable oil-based solvent is typically cooled to ambient temperature, when it may then be incorporated into an intaglio ink.

The invention provides a method of making a mineral oil-free intaglio ink, the method comprising making a varnish by following the method of making a varnish recited above, and making an intaglio ink comprising the varnish. Making the intaglio ink is typically performed at ambient temperature, typically under ambient atmosphere.

Making the intaglio ink typically comprises mixing into the varnish one or more of oxidatively curable materials, high acid value resins, colorants, fillers, rheology modifiers, waxes, emulsifying agents, and siccative driers. The mixing may include triple-roll milling, optionally a pre-mixing step followed by triple-roll milling.

Intaglio printing inks for security printing are normally composed of oxidatively curable material, a high acid value resin, colorants, fillers, rheology modifiers, waxes, emulsifying agents, siccative driers and solvents. Details of these components are provided below. It will be understood that these details are relevant to the varnishes, inks, and methods provided by the present invention.

Examples of Oxidatively curable materials:

The oxidatively curable materials may include linseed or soybean based alkyd of long oil length, medium-oil-length, or short oil length where the acid used may be acid anhydride, phthalic acid, isophthalic acid, diolefinic acid or vinylformic acid and a polyvalent alcohol such as glycerol, pentaerythritol, ethylene glycol, trimethylolpropane or tetramethylolmethane; urethane modified alkyd such as urethane modified soya or linseed oil alkyd; modified soya or linseed oil alkyd; epoxy ester; high acid value alkyd; long chain unsaturated polyacid such as fumaric acid modified vegetable oil and/or drying oils such as tung oil and/or linseed oil. Preferably the oxidatively curable materials are selected from the group consisting of linseed and soybean-based alkyds of long oil length, medium-oil-length, and short oil length and combinations thereof.

Long, medium, and short oil length alkyds are widely used terms which may indicate the fatty acid content of the alkyd. For instance, long oil alkyds may contain more than 60 wt% fatty acids, medium oil alkyds may contain 40-60 wt% fatty acids, and short oil alkyds may contain less than 40 wt% fatty acids.

In the varnish, the oxidatively curable materials may be present in an amount of 50-80 wt% or 60-70 wt%. The ink may comprise 5-35 wt%, 9-25 wt%, or 12-22 wt% oxidatively curable material.

In the invention, the oxidatively curable materials comprise an epoxy ester and/or a urethane modified alkyd. The epoxy ester may be a reaction product of a vegetable oil fatty acid and an epoxy resin. The urethane modified alkyd may be a reaction product of the residual OH groups of a vegetable based liquid alkyd resin and the NCO groups from an isocyanate such as TDI (toluene diisocyanate).

The epoxy ester and/or urethane modified alkyd may be present in the varnish in an amount of 2-50 wt%, 4-40 wt%, or 8-30 wt%. The epoxy ester and/or urethane modified alkyd may be present in the ink in an amount of 1-20 wt%, 2-15 wt%, or 2.5-10 wt%.

The epoxy ester may be present in the varnish an amount of 2-40 wt%, 4-30 wt%, or 6-20 wt%. The epoxy ester may be present in the ink in an amount of 1-20 wt%, 2-15 wt%, or 2.5-10 wt%.

The urethane modified alkyd may be present in the varnish an amount of 5-50 wt%, 15-40 wt%, or 25-30 wt%. The urethane modified alkyd may be present in the ink in an amount of 1-20 wt%, 2.5-15 wt%, or 5-10 wt%.

Examples of High Acid Value Resins:

The High Acid Value Resins may include high acid value rosin modified phenolic resin based on gum rosin, paraformaldehyde and/or fumaric acid and/or maleic anhydride and/or pentaerythritol and/or nonylphenol and/or octyl phenol. The acid value of the high acid value resin, for example the described high acid value rosin modified phenolic resin, is 100-160 mgKOH/g, more preferably 110-140 mgKOH/g.

In the varnish, the high acid value resin may be present in an amount of 20-40 wt% or 20-30 wt%. The ink may comprise 1-30 wt%, or 3-20 wt%, or 6-10 wt% high acid value resin.

Acid Value may be determined by titration with 0.1M potassium hydroxide solution using phenolphthalein solution indicator, as is widely known. For example, acid value may be determined by weighing approximately 1.0g of sample accurately (to 2 decimal places) into a clean, dry conical flask and recording the amount used. Approximately 50mL of a 3:1 mixture of toluene and industrial methylated spirit is then added to the conical flask to dissolve the varnish sample along with 6-8 drops of phenolphthalein solution indicator. Standardized 0.1M potassium hydroxide in methanol is then titrated into the conical flask solution with mixing until a pink color develops and persists for 30 seconds. The Acid Value of the varnish is determined by using the calculation below.

$$\text{Acid Value} = \frac{\text{mL of KOH} \times 5.61}{\text{Weight of sample used}}$$

The Acid Value result is recorded as milligrams of potassium hydroxide per gram of sample or mg KOH/g.

Examples of Fillers:

Fillers may include organoclays, fumed silica, aluminum silicate, aluminum hydrosilicate, ground natural calcium carbonate, barium sulphate or fine china clay.

The ink may comprise 20-70 wt%, or 30-60 wt%, or 40-50 wt% filler.

Examples of Colorants:

The colorant may be any pigment that can be employed in printing inks. It may be organic or inorganic and may be a dye or pigment. Typical examples of useable colorants include, but are not limited to, inorganic pigments, such as Pigment White 6 (Titanium Dioxide), Pigment Black 7 (carbon black), Pigment Black 11 (Black Iron Oxide), Pigment Red 101 (Red Iron Oxide) and Pigment Yellow 42 (Yellow Iron Oxide), and organic pigments such as Pigment Yellow 1, Pigment Yellow 3, Pigment Yellow 12, Pigment Yellow 13, Pigment Yellow 14, Pigment Yellow 17, Pigment Yellow 37, Pigment Yellow 63, Pigment Yellow 65, Pigment Yellow 73, Pigment Yellow 74, Pigment Yellow 75, Pigment Yellow 83, Pigment Yellow 97, Pigment Yellow 98, Pigment Yellow 106, Pigment Yellow 114, Pigment Yellow 121, Pigment 26Yellow 126, Pigment Yellow 136, Pigment Yellow 174, Pigment Yellow 176, Pigment Yellow 188, Pigment Orange 5, Pigment Orange 13, Pigment Orange 16, Pigment Orange 34, Pigment Red 2, Pigment Red 9, Pigment Red 14, Pigment Red 17, Pigment Red 22, Pigment Red 23, Pigment Red 37, Pigment Red 38, Pigment Red 41, Pigment Red 42, Pigment Red 112, Pigment Red 146, Pigment Red 170, Pigment Red 196, Pigment Red 210, Pigment Red 238, Pigment Blue 15, Pigment Blue 15:1, Pigment Blue 15:2, Pigment Blue 15:3, Pigment Blue 15:4, Pigment Green 7, Pigment Green 36, Pigment Violet 23 and the like.

Suitable inorganic pigments include, but are not limited to, carbon black and titania ($TiO_2$), while suitable organic pigments include, but are not limited to, phthalocyanines, anthraquinones, perylenes, carbozoles, monoazo- and disazobenzimidazolones, isoindolinones, monoazonaphthols, diarylidepyrazolones, rhodamines, indigoids, quinacridones, diazopyranthrones, dinitranilines, pyrazolones, dianisidines, pyranthrones, tetrachloroisoindolinones, dioxazines, monoazoacrylides, and anthrapyrimidines. It will be recognized by those skilled in the art that organic pigments are differently shaded, or even have different colors, depending on the functional groups attached to the main molecule.

The dyes include but are not limited to azo dyes, anthraquinone dyes, xanthene dyes, azine dyes, combinations thereof and the like.

The ink may comprise 1-15 wt%, or 2-10 wt%, or 3-7 wt% colorant.

Examples of Additives:

As with most ink and coating compositions, additives may be incorporated to enhance various properties. A partial list of such additives includes but is not limited to adhesion promoters, silicones, light stabilizers, optical brighteners, de-gassing additives, ammonia, flow promoters, defoamers, antioxidants, stabilizers, surfactants, dispersants, plasticizers, rheological additives, waxes, silicones, etc.

Examples of Solvents:

Solvents for security inks may include vegetable oil (e.g. soya bean oil, castor oil, rapeseed oil, linseed oil, tung oil), mineral oil, aliphatic hydrocarbons, cyclic hydrocarbons, aromatic hydrocarbons, ketones, aldehydes, alcohols, ethers, esters. Drying oils such as linseed oil and tung oil may act as both solvents and as oxidatively curable materials.
The invention utilizes bio-renewable iso-alkane vegetable oil-based solvents. The varnish may comprise 5-30 wt% or 10-20 wt% bio-renewable iso-alkane vegetable oil-based solvent. The ink may comprise 2-50 wt%, or 4-30 wt%, or 6-20 wt% bio-renewable iso-alkane vegetable oil-based solvent.

Examples of Co-Solvents:

Co-solvents, which are preferably bio-renewable, many include refined soya bean oil, rapeseed oil, castor oil, refined linseed oil and tung oil.
The varnish may comprise 1-15wt% or 5-10wt% of a bio-renewable co-solvent. The ink may comprise 0.5-20 wt% or 1-10 wt% of a bio-renewable co-solvent.
The present invention has been described in detail, including the preferred embodiments thereof. However, it will be appreciated that those skilled in the art, upon consideration of the present disclosure, may make modifications and/or improvements on this invention that fall within the scope the invention, as defined in the claims.

## EXAMPLES

The invention is further described by the following non-limiting examples which further illustrate the invention, and are not intended, nor should they be interpreted to, limit the scope of the invention.
Index of Examples:

Example 1 is a comparative example using conventional mineral oil Exxsol D60.
Example 2 is a comparative example using an unsaturated linseed oil fatty acid ester C16-18 to replace the mineral oil with an alternative bio-renewable solvent which is shown to be not suitable for intaglio printing.
Example 3 (reference) modifies Example 1 by using as the solvent a C13-C18 bio-renewable iso-alkane derived from vegetable oil having a difference between the initial and final boiling points of about 25°C.
Example 4 (reference) modifies Example 3 by adding drying oil as a co-solvent.
Example 5 replaces the long oil length alkyd with epoxy ester into the invention.
Example 6 utilises a combination of long oil length alkyd and epoxy ester resin into the invention.
Example 7 (reference) utilises modified alkyd, high acid value alkyd and resin emulsifier.
Example 8 utilises urethane alkyd, high acid value alkyd and resin emulsifier into the invention.
Example 9 is a comparative example based on Example 1 but using refined linseed oil instead of mineral oil.
Example 10 is a comparative example based on Example 5 but using refined linseed oil instead of bio-renewable iso-alkane.
Example 11 is an inventive example based on Example 5 but using a bio-renewable iso-alkane derived from vegetable oil which has a carbon chain length of C11-C13 having a difference between the initial and final boiling points of about 20°C.
Example 12 is a comparative example based on Example 1 where the the Exxsol D60 mineral oil solvent is replaced with a high boiling mineral oil solvent, boiling range 275 - 320°C.
Examples 13 - 24 are intaglio inks which use the above varnishes.

The varnishes are prepared by mixing the oxidatively curable materials (e.g. alkyd components, long chain polyacid and epoxy ester) together in accordance with the formulations in the examples and heating to 180°C under inert gas. The resin (e.g. modified phenol formaldehyde resin) is added and the mixture is stirred until the resin is completely dissolved. The mixture is cooled to 160°C and the requisite solvents in the formulations are added. The mixture is allowed to cool to room temperature before incorporating into an intaglio ink

Example 1: (Comparative) Mineral Oil Based Intaglio Varnish

| Material | wt% |
|---|---|
| Long oil length alkyd | 34 |
| Long chain unsaturated polyacid | 30.4 |
| Modified phenol formaldehyde resin | 21 |
| Exxsol D60 mineral oil solvent | 14.6 |
| Total | 100 |

Example 2: (Comparative) Fatty Acid Ester of Vegetable Oil-based Intaglio Varnish (comparative formulation where the Exxsol D60 mineral oil solvent is replaced with fatty acid ester of vegetable oil)

| Material | wt% |
|---|---|
| Long oil length alkyd | 34 |
| Long chain unsaturated polyacid | 30.4 |
| Modified phenol formaldehyde resin | 21 |
| Fatty acid ester of vegetable oil | 14.6 |
| Total | 100 |

Example 3: (Reference) Iso-alkane-based Intaglio Varnish

| Material | wt% |
|---|---|
| Long oil length alkyd | 34 |
| Long chain unsaturated polyacid | 30.4 |
| Modified phenol formaldehyde resin | 21 |
| Vegetable oil iso-alkane (1) | 14.6 |
| Total | 100 |

Example 4: (Reference) Iso-alkane-based intaglio varnish

| Material | wt% |
|---|---|
| Long oil length alkyd | 34 |
| Long chain unsaturated polyacid | 30.4 |
| Modified phenol formaldehyde resin | 21 |
| Vegetable oil iso-alkane (1) | 7.6 |
| Drying oil | 7 |
| Total | 100 |

Example 5: (Inventive) Iso-alkane-based varnish

8

| Material | wt% |
|---|---|
| Epoxy Ester | 18.7 |
| Long chain unsaturated polyacid | 44 |
| Modified phenol formaldehyde resin | 15 |
| Drying oil | 7 |
| Vegetable oil iso-alkane (1) | 15.3 |
| Total | 100 |

Example 6: (Inventive) Iso-alkane-based varnish

| Material | wt% |
|---|---|
| Long oil length alkyd | 17 |
| Epoxy Ester | 9.35 |
| Long chain unsaturated polyacid | 37.1 |
| Modified phenol formaldehyde resin | 15 |
| Drying oil | 3.9 |
| Vegetable oil iso-alkane (1) | 14.65 |
| Total | 100 |

Example 7: (Reference) Iso-alkane-based varnish

| Material | wt% |
|---|---|
| Modified alkyd based on linseed or soya bean oil | 27 |
| High acid value alkyd | 24 |
| Resin emulsifier | 12 |
| Modified phenol formaldehyde resin | 30 |
| Vegetable oil iso-alkane (1) | 7 |
| Total | 100 |

Example 8: (Inventive) Iso-alkane-based varnish

| Material | wt% |
|---|---|
| Urethane modified alkyd | 27 |
| High acid value alkyd | 23 |
| Resin emulsifier | 12 |
| Modified phenol formaldehyde resin | 30 |
| Vegetable oil iso-alkane (1) | 8 |
| Total | 100 |

Example 9: (Comparative) Vegetable oil-based varnish

| Material | wt% |
| --- | --- |
| Long oil length alkyd | 34 |
| Long chain unsaturated polyacid | 30.4 |
| Modified phenol formaldehyde resin | 21 |
| Refined linseed oil | 14.6 |
| Total | 100 |

Example 10: (Comparative) Vegetable oil-based varnish

| Material | wt% |
| --- | --- |
| Epoxy ester | 18.7 |
| Long chain unsaturated polyacid | 44 |
| Modified phenol formaldehyde resin | 15 |
| Drying oil | 7 |
| Refined linseed oil | 15.3 |
| Total | 100 |

Example 11: (Inventive) Iso-alkane-based varnish - alternative iso-alkane

| Material | wt% |
| --- | --- |
| Epoxy ester | 18.7 |
| Long chain unsaturated polyacid | 44 |
| Modified phenol formaldehyde resin | 15 |
| Drying oil | 10 |
| Vegetable oil iso-alkane (2) | 12.3 |
| Total | 100 |

Example 12: (Comparative) High Boiling Mineral Oil-Based Varnish

| Material | wt% |
| --- | --- |
| Long oil length alkyd | 34 |
| Long chain unsaturated polyacid | 30.4 |
| Modified phenol formaldehyde resin | 21 |
| High Boiling Point Mineral oil solvent | 14.6 |
| Total | 100 |

Viscosity, tack and solids content was measured for the above varnish examples using the following test methods:

VISCOSITY: Measured with a CAP 2000+ Viscometer using a 0.30mL of sample of product. The equipment setting was Spindle 09 at a speed of 50rpm at 25°C.

TACK: Measured using the Protack Tack Meter. Varnishes were tested using 1.0mL of sample with the machine set to Program 4 @ 25°C.

SOLIDS CONTENT OF VARNISHES: The solids content was determined using a Sartorius MA35 Solids Content Testing Unit. 0.5g of varnish sample was accurately weighed onto a foil square on the Sartorius MA35 unit which had been set at a temperature setting of 160°C for a duration of 30 minutes. The lid is then closed to start the test and the solids content of the varnish sample automatically indicated after the test is completed on a digital readout.

Table 1: Varnish Properties

| Property | Ex. 1 (Comp.) | Ex. 2 (Comp.) | Ex. 3 (Ref.) | Ex. 4 (Ref.) | Ex. 5 (Inv.) | Ex. 6 (Inv.) | Ex. 7 (Ref.) | Ex.8 (Inv.) |
|---|---|---|---|---|---|---|---|---|
| Viscosity (Pa.s) | 30.6 | 29.3 | 26.2 | 34.4 | 35.7 | 38.2 | 56.7 | 29.6 |
| Tack | 524 | 325 | 296 | 377 | 275 | 379 | 575 | 353 |
| Solids | 84.67% | 90.24% | 86.16% | 87.01% | 85.53% | 84.24% | 92.28% | 90.10% |

Table 1 (cont.)

| Property | Ex. 9 (Comp.) | Ex. 10 (Comp.) | Ex. 11 (Inv.) | Ex. 12 (Comp.) |
|---|---|---|---|---|
| Viscosity (Pa.s) | 30.0 | 77.6 | 37.8 | 63.8 |
| Tack | 939 | 721 | 660 | 496 |
| Solids | 99.02% | 98.68% | 86.52% | 84.62% |

Table 1 exhibits the fitness for use for all of the inventive examples (Examples 3-8 and 11) in terms of tack. As is known to those skilled in the art; viscosity and solids content can be further adjusted by suitable solvent additions, so all the inventive examples were suitable for incorporation into intaglio printing inks.

The varnish examples in Table 1 were incorporated into a standard intaglio ink formulation detailed in the examples below. Approximately 400g sized batches of inks were produced by premixing all materials on a laboratory tri-foil mixer for approximately 15 minutes until a smooth paste had been achieved. The pre-mix was then given two passes through a small production triple roll mill at medium setting conditions (15psi, front and back roller settings). Particle size was checked on a 50$\mu$m Sheen grinding gauge. If there was scratching above 10$\mu$m further milling would be required. In the comparative ink formulations based on refined linseed oil (Example 21 and Example 22), additional refined linseed oil was required to achieve suitable viscosity and tack for testing purposes.

Example 13: (Comparative) Intaglio Ink Formulation using Example 1 Mineral Oil Based Intaglio Varnish

| Material | wt% |
|---|---|
| Mineral Oil Based Intaglio Varnish (Example 1) | 31.25% |
| Permanent Carmine (Pigment Red 146) | 5% |
| Mineral Oil Distillate | 10.25% |
| Waxes | 6.5% |
| Fillers (Calcium Carbonate) | 43.8% |
| Rheology Modifier | 3% |
| Siccative Driers | 0.2% |
| Total | 100 |

Example 14: (Comparative) Intaglio Ink Formulation using Example 2 Fatty Acid Ester of Vegetable Oil Based Intaglio Varnish

| Material | wt% |
|---|---|
| Fatty Acid Ester of Vegetable Oil Based Intaglio Varnish (Example 2) | 31.25% |
| Permanent Carmine (Pigment Red 146) | 5% |
| Fatty Acid Ester of Vegetable Oil | 10.25% |
| Waxes | 6.5% |
| Fillers (Calcium Carbonate) | 43.8% |
| Rheology Modifier | 3% |
| Siccative Driers | 0.2% |
| Total | 100 |

Example 15: (Reference) Intaglio Ink Formulation using Example 3 Iso-Alkane Based Intaglio Varnish

| Material | wt% |
|---|---|
| Iso-Alkane Based Intaglio Varnish (Example 3) | 31.25% |
| Permanent Carmine (Pigment Red 146) | 5% |
| Vegetable Oil Iso-Alkane (1) | 10.25% |
| Waxes | 6.5% |
| Fillers (Calcium Carbonate) | 43.8% |
| Rheology Modifier | 3% |
| Siccative Driers | 0.2% |
| Total | 100 |

Example 16: (Reference) Intaglio Ink Formulation using Example 4 Iso-Alkane Based Intaglio Varnish

| Material | wt% |
|---|---|
| Iso-Alkane Based Intaglio Varnish (Example 4) | 31.25% |
| Permanent Carmine (Pigment Red 146) | 5% |
| Vegetable Oil Iso-Alkane (1) | 5.25% |
| Drying oil | 5% |
| Waxes | 6.5% |
| Fillers (Calcium Carbonate) | 43.8% |
| Rheology Modifier | 3% |
| Siccative Driers | 0.2% |
| Total | 100 |

Example 17: (Inventive) Intaglio Ink Formulation using Example 5 Iso-Alkane Based Intaglio Varnish

| Material | wt% |
|---|---|
| Iso-Alkane Based Intaglio Varnish (Example 5) | 31.25% |
| Permanent Carmine (Pigment Red 146) | 5% |
| Vegetable Oil Iso-Alkane (1) | 10.25% |
| Waxes | 6.5% |
| Fillers (Calcium Carbonate) | 43.75% |
| Rheology Modifier | 3% |
| Siccative Driers | 0.25% |
| Total | 100 |

Example 18: (Inventive) Intaglio Ink Formulation using Example 6 Iso-Alkane Based Intaglio Varnish

| Material | wt% |
|---|---|
| Iso-Alkane Based Intaglio Varnish (Example 6) | 31.25% |
| Permanent Carmine (Pigment Red 146) | 5% |
| Vegetable Oil Iso-Alkane (1) | 10.25% |
| Waxes | 6.5% |
| Fillers (Calcium Carbonate) | 43.8% |
| Rheology Modifier | 3% |
| Siccative Driers | 0.2% |
| Total | 100 |

Example 19: (Reference) Intaglio Ink Formulation using Example 7 Iso-Alkane Based Intaglio Varnish

| Material | wt% |
|---|---|
| Iso-Alkane Based Intaglio Varnish (Example 7) | 31.25% |
| Permanent Carmine (Pigment Red 146) | 5% |
| Vegetable Oil Iso-Alkane (1) | 10.25% |
| Waxes | 6.5% |
| Fillers (Calcium Carbonate) | 43.8% |
| Rheology Modifier | 3% |
| Siccative Driers | 0.2% |
| Total | 100 |

Example 20: (Inventive) Intaglio Ink Formulation using Example 8 Iso-Alkane Based Intaglio Varnish

| Material | wt% |
|---|---|
| Iso-Alkane Based Intaglio Varnish (Example 8) | 31.25% |
| Permanent Carmine (Pigment Red 146) | 5% |
| Vegetable Oil Iso-Alkane (1) | 10.25% |
| Waxes | 6.5% |
| Fillers (Calcium Carbonate) | 43.8% |
| Rheology Modifier | 3% |
| Siccative Driers | 0.2% |
| Total | 100 |

Example 21: (Comparative) Intaglio Ink Formulation using Example 9 Vegetable Oil Based Intaglio Varnish

| Material | wt% |
|---|---|
| Linseed Oil Based Intaglio Varnish (Example 9) | 31.25% |
| Permanent Carmine (Pigment Red 146) | 5% |
| Refined Linseed Oil | 10.25% |
| Waxes | 6.5% |
| Fillers (Calcium Carbonate) | 43.8% |
| Rheology Modifier | 3% |
| Siccative Driers | 0.2% |
| Total | 100 |
| Refined Linseed Oil to achieve specification | + 9.0wt% |

Example 22: (Comparative) Intaglio Ink Formulation using Example 10 Vegetable Oil Based Intaglio Varnish

| Material | wt% |
|---|---|
| Linseed Oil Based Intaglio Varnish (Example 10) | 31.25% |
| Permanent Carmine (Pigment Red 146) | 5% |
| Refined Linseed Oil | 10.25% |
| Waxes | 6.5% |
| Fillers (Calcium Carbonate) | 43.75% |
| Rheology Modifier | 3% |
| Siccative Driers | 0.25% |
| Total | 100 |
| Refined Linseed Oil to achieve specification | + 8.0wt% |

Example 23: (Inventive) Intaglio Ink Formulation using Example 11 Iso-Alkane Based Intaglio Varnish

| Material | wt% |
|---|---|
| Iso-Alkane Based Intaglio Varnish (Example 11) | 34.75% |
| Permanent Carmine (Pigment Red 146) | 5% |
| Vegetable Oil Iso-Alkane (2) | 11.5% |
| Waxes | 6.5% |
| Fillers (Calcium Carbonate) | 40.0% |
| Rheology Modifier | 2% |
| Siccative Driers | 0.25% |
| Total | 100 |

Example 24: (Comparative) Intaglio Ink Formulation using Example 12 High Boiling Point Mineral Oil Based Intaglio Varnish

| Material | wt% |
|---|---|
| Mineral Oil Based Intaglio Varnish (Example 12) | 31.25% |
| Permanent Carmine (Pigment Red 146) | 5% |
| High Boiling Mineral Oil Distillate | 10.25% |
| Waxes | 6.5% |
| Fillers (Calcium Carbonate) | 43.8% |
| Rheology Modifier | 3% |
| Siccative Driers | 0.2% |
| Total | 100 |

Viscosity, tack, drying time and solubility in wiping solution was measured for the above intaglio ink examples using the following test methods:
VISCOSITY: Measured viscosity on a CAP 2000+ Viscometer using a 0.30mL of sample of product. The equipment setting was Spindle 09 at a speed of 50rpm. Intaglio inks are tested at 40°C.

TACK: Tack is measured using the Protack Tack Meter. Intaglio inks are tested using a 2.0mL sample with the machine set to Program 4 at 40°C.

INK DRYING TIME: The drying times of the Intaglio Permanent Carmine Ink preparations were tested on the TQC Sheen Drying Recorder. A 25μ film of ink was applied to a large glass slide using a film applicator, the machine set to zero, the needle applied to the ink surface and the recorder switched on. The ink drying time is recorded as being the point where the needle no longer makes a mark in the ink film on the glass slide.

INK SETTING SPEED: 2-inch-wide prints of all the Intaglio Permanent Carmine Inks preparations were prepared on banknote paper using the Peach Print Proofer using 0.5g of ink sample. Immediately after printing, another sheet of banknote paper was placed on top and both sheets fixed back in the printer on the printing platform with a fresh roller in contact. The roller mechanism was then moved forward at timed intervals (1 min., 5 min., 10 min., 15 min., 20 min., 25 min. etc.) and the intensity of ink transfer onto the second sheet for each sample obtained. Each of the inks' setting speed was graded against the standard using the following nomenclature: = standard; ↑ standard (faster than standard); ↓ standard (slower than standard).

WIPING SOLUTION SOLUBILITY

Wiping Solution is placed into a 500ml glass beaker, a magnetic stirrer bar added and the contents heated under stirring on a hot plate mixer to 40°C. Approximately 1.0g of each of the ink samples is applied to the inside of a 50ml glass measuring cylinder, near the top, and the 40°C wiping solution poured into the measuring cylinder to the top. The time when the ink first started to precipitate in the wiping solution (in seconds) is recorded along with the ability for the ink to precipitate in the solution graded from 1 to 5 using the following criteria:

Wiping Solution Rating

5 = Excellent: Very fine precipitate and very fast flow. Start time < 5 seconds.
4 = Very Good: Fine precipitate and fast flow. Start time < 5 seconds.
3 = Good: Fine - coarse precipitate with good flow. Start time < 10 seconds.
2 = Acceptable: Coarse precipitate with reasonable flow. Start time < 15 seconds.
1 = Poor: Ink detaching in lumps with slow flow. Start time < 20 seconds
0 = No Precipitate: No ink precipitation. No start time.

Wiping Solution Formulations

Wiping Solution A

| Material | wt% |
|---|---|
| Sodium Hydroxide Solid | 1.0% |
| Sulphonated Castor Oil | 0.5% |
| Demineralized Water | 98.5% |
| Total | 100 |

Wiping Solution B

| Material | wt% |
|---|---|
| Sodium Hydroxide Solid | 0.6% |
| Sulphonated Castor Oil | 0.6% |
| Demineralized Water | 98.8% |
| Total | 100 |

Table 2: Ink Properties

| Intaglio Ink Formulations | Viscosity | Tack | Drying Time | Setting Speed | Wiping Sol A Solubility | Wiping Sol B Solubility |
|---|---|---|---|---|---|---|
| Example 13 (comparative): Formulated on Ex. 1 Mineral Oil Based Intaglio Varnish | 13.2 Pa.s | 133 | 14 hours | Standard | 3 | 4 |
| Example 14 (comparative): Formulated on Ex. 2 Fatty Acid Ester of Vegetable Oil based Intaglio Varnish | 16.2 Pa.s | 136 | 45 hours | ↓ Standard | 3 | 3-4 |
| Example 15 (reference): Formulated on Ex. 3 Iso-alkane based Intaglio Varnish | 12.4 Pa.s | 109 | 18 hours | = Standard | 3 | 3-4 |
| Example 16 (reference): Formulated on Ex. 4 Iso-alkane based Intaglio Varnish | 16.8 Pa.s | 151 | 12 hours | = Standard | 3 | 3-4 |
| Example 17: Formulated on Ex. 5 Iso-alkane based Intaglio Varnish | 14.7 Pa.s | 131 | 18 hours | = Standard | 4 | 3-4 |

(continued)

| Intaglio Ink Formulations | Viscosity | Tack | Drying Time | Setting Speed | Wiping Sol A Solubility | Wiping Sol B Solubility |
|---|---|---|---|---|---|---|
| Example 18: Formulated on Ex. 6 Iso-alkane based Intaglio Varnish | 13.7 Pa.s | 130 | 13 hours | = Standard | 3-4 | 4 |
| Example 19 (reference): Formulated on Ex. 7 Iso-alkane based Intaglio Varnish | 11.4 Pa.s | 99 | 17 hours | ↑ Standard | 4 | 4 |
| Example 20: Formulated on Ex. 8 Iso-alkane based Intaglio Varnish | 11.6 Pa.s | 98 | 16 hours | ↑ Standard | 3-4 | 3-4 |
| Example 21 (comparative): Formulated on Ex. 9 Vegetable Oil Based Intaglio Varnish | 16.8 Pa.s | 137 | 25 hours | ↓↓ Standard | 2-3 | 3 |
| Example 22 (comparative): Formulated on Ex. 10 Vegetable Oil based Intaglio Varnish | 16.7 Pa.s | 136 | 26 hours | ↓↓ Standard | 4 | 4 |
| Example 23: Formulated on Ex. 11 Iso-alkane based Intaglio Varnish | 13.2 Pa.s | 145 | 8 hours | ↑↑ Standard | 4 | 4 |
| Example 24 (comparative): Formulated on Ex. 12 High Boiling Mineral Oil-Based Varnish | 22.5 Pa.s | 114 | 30 hours | ↓ Standard | 2 | 3 |
| For comparative purposes, typical properties for a standard intaglio ink is:<br>Brookfield Viscosity: 12-18 Pa.s<br>Tack: 90 - 160<br>Wiping Solution Solubility: ≥3<br>Drying time: 12-20 hr. | | | | | | |

Table 2 exhibits the fitness for use as printing inks of the inventive examples (Examples 17-18, 20 and 23) in terms of setting properties, viscosity, tack and wiping solution solubility. In particular they show satisfactory drying, setting characteristics and solubility in press wiping solutions with lower NaOH concentrations. This means that the inks are suitable for printing on commercial intaglio printing presses and will give good quality prints without set-off defects.

The raw materials in Examples 17 and 18 were manipulated to achieve the required setting and drying properties in the intaglio ink formulation. Manipulation of the raw materials in a varnish formulation means that the percentages of each component are adjusted to obtain the required rheology, setting and drying properties in the final ink.

Notably, the examples using iso-alkane vegetable-based solvent (Examples 15-20, and 23) were found to have improved properties for use as intaglio inks compared to the comparative examples using the vegetable-based solvents Fatty Acid Ester of Vegetable Oil and Refined Linseed Oil (Examples 14, 21, and 22), in particular improved drying time and setting speed. This demonstrates the improvement provided by the invention in comparison to other mineral oil-free formulations utilizing vegetable-based solvents.

INK PHYSICAL AND CHEMICAL RESISTANCE TESTS:

2-inch-wide prints of all the laboratory produced Permanent Carmine Intaglio Inks were prepared on banknote paper using the Peach Print Proofer using 1.5g of ink sample. Physical resistance was measured on prints which had been left to dry for 24 hours at ambient temperature and humidity. Rub resistance was tested using the THI rub tester using a 4lb weight for 100 rubs and the transfer of color on the back of the facing sheet of paper/poly stock graded for scuff/rub intensity. The prints were allowed to dry at ambient temperature and humidity for at least 14 days prior to testing for chemical resistance. The prints were cut into strips and the chemical resistance tests carried out on each of the dried inks as detailed in Table 3 below.

Table 3: Chemical Resistance Properties

Print drawdowns of all the laboratory produced Intaglio Permanent Carmine Intaglio Inks were prepared on banknote paper using a Number 2 K Bar and left to air for dry 8 days. The prints were cut into strips and the chemical resistance tests carried out on each of the dried inks by immersing the prints into the designated solution as detailed in the table of results below.

| Test Solution | Temp (°C) | Time (min) | Wash | Minimum Spec | Ex 13 | Ex 14 | Ex 15 | Ex 16 | Ex 17 | Ex 18 | Ex 19 | Ex 20 |
|---|---|---|---|---|---|---|---|---|---|---|---|---|
| Ethyl Alcohol | 23 | 30 | - | 3 | 4 | 4 | 4 | 4 | 4 | 4 | 4 | 4 |
| Acetone | 23 | 30 | - | 3 | 4 | 4 | 4 | 4 | 4 | 4 | 4 | 4 |
| Xylene | 23 | 30 | - | 3 | 4 | 4 | 4 | 4 | 4 | 4 | 4 | 4 |
| 20% Acetic Acid | 23 | 30 | W | 3 | 4 | 4 | 4 | 4 | 4 | 4 | 4 | 4 |
| 10% Hydrochloric Acid | 23 | 30 | W | 3 | 4 | 4 | 4 | 4 | 4 | 4 | 4 | 4 |
| 10% Sodium Hypochlorite | 23 | 30 | W | 3 | 4 | 4 | 4 | 4 | 4 | 4 | 4 | 4 |
| 2% Sodium Hydrate | 23 | 30 | W | 3 | 4 | 4 | 4 | 4 | 4 | 4 | 4 | 4 |
| 2% Sulphuric Acid | 23 | 30 | W | 3 | 4 | 4 | 4 | 4 | 4 | 4 | 4 | 4 |
| 10% Hydrogen Peroxide | 23 | 30 | W | 3 | 4 | 4 | 4 | 4 | 4 | 4 | 4 | 4 |
| Diethylene Glycol | 23 | 30 | - | 3 | 4 | 4 | 4 | 4 | 4 | 4 | 4 | 4 |
| Multisol L Isoparaffin | 23 | 30 | - | 3 | 4 | 4 | 4 | 4 | 4 | 4 | 4 | 4 |
| Synthetic Perspiration[1] | 23 | 30 | - | 3 | 4 | 4 | 4 | 4 | 4 | 4 | 4 | 4 |
| Water 80°C | 80 | 30 | - | 3 | 4 | 4 | 4 | 4 | 4 | 4 | 4 | 4 |
| Water 100°C | 100 | 30 | - | 3 | 4 | 4 | 4 | 4 | 4 | 4 | 4 | 4 |
| Soap Solution[2] | | 85 | | 3 | 4 | 4 | 4 | 4 | 4 | 4 | 4 | 4 |
| James Heal ECE non phosphate[3] | | 60 | | 3 | 4 | 4 | 4 | 4 | 4 | 4 | 4 | 4 |
| Rub Resistance (100 rubs) | | | | 3 | 3 | 3 | 3 | 3 | 4 | 4 | 2-3 | 3 |

Table 3 (continued)

| Test Solution | Temp (°C) | Time (min) | Wash | Minimum Spec | Ex 23 | Ex 24 |
|---|---|---|---|---|---|---|
| Ethyl Alcohol | 23 | 30 | - | 3 | 4 | 4 |
| Acetone | 23 | 30 | - | 3 | 4 | 4 |
| Xylene | 23 | 30 | - | 3 | 4 | 4 |
| 20% Acetic Acid | 23 | 30 | W | 3 | 4 | 4 |
| 10% Hydrochloric Acid | 23 | 30 | W | 3 | 4 | 4 |
| 10% Sodium Hypochlorite | 23 | 30 | W | 3 | 4 | 4 |

(continued)

| Test Solution | Temp (°C) | Time (min) | Wash | Minimum Spec | Ex 23 | Ex 24 |
|---|---|---|---|---|---|---|
| 2% Sodium Hydrate | 23 | 30 | W | 3 | 4 | 3 |
| 2% Sulphuric Acid | 23 | 30 | W | 3 | 4 | 4 |
| 10% Hydrogen Peroxide | 23 | 30 | W | 3 | 4 | 4 |
| Diethylene Glycol | 23 | 30 | - | 3 | 4 | 4 |
| Multisol L Isoparaffin | 23 | 30 | - | 3 | 4 | 4 |
| Synthetic Perspiration[1] | 23 | 30 | - | 3 | 4 | 4 |
| Water 80°C | 80 | 30 | - | 3 | 4 | 4 |
| Water 100°C | 100 | 30 | - | 3 | 4 | 4 |
| Soap Solution[2] | | 85 | | 3 | 4 | 4 |
| James Heal ECE non phosphate[3] | | 60 | | 3 | 4 | 3 |
| Rub Resistance (100 rubs) | | | | 3 | 3 | 3 |

[1]Formulation for Synthetic Perspiration Solution

Demineralised Water: 1000ml
Sodium Chloride: 20grams
Ammonium Chloride: 17.5grams
Acetic Acid: 5ml
Lactic Acid Solution: 18ml
Sodium Hydroxide: 50ml (30% solution)

[2]Formulation for Soap Solution

Clover Pink Liquid Soap: 10.0%
Demineralised Water: 90.0%

[3]Formulation for James Heal ECE non-Phosphate

James Heal non-Phosphate ECE Soap Powder: 0.50%
Demineralised Water: 99.50%

All solutions require thorough mixing until fully homogeneous prior to use.

Chemical Resistance Rating

4 (best): No Visible Change
3: Minor Change (< 10% ink removal or bleaching)
2: Moderate Change (10%-50% ink removal or bleaching)
1: Significant Change ($\geq$ 50% ink removal or bleaching)

0 (worst): Complete Ink Removal or Bleaching; Bleaching is defined as a loss in colour

Table 3 exhibits the fitness for use of final documents printed using the inventive examples (Examples 17-18, 20 and 23) in terms of physical and chemical resistance. These tests measure the performance of the printed ink against a range of circulation hazards that banknotes may be exposed to. Example 19 showed slightly reduced rub resistance compared to typical properties for an intaglio ink. This means that it may show more wear in a harsh circulating environment but would give acceptable performance on other value documents.

**Claims**

1. A varnish which is suitable for formulating intaglio inks, comprising a bio-renewable iso-alkane vegetable oil-based solvent, oxidatively curable materials, and high acid value resins having an acid number of 100-160 mgKOH/g, wherein the varnish is mineral oil-free;
   wherein the oxidatively curable materials comprise an epoxy ester and/or a urethane modified alkyd.

2. The varnish of any preceding claim, wherein:

   the oxidatively curable materials are present in an amount of 50-80%, preferably 60-70% based on the weight of the varnish; and/or
   the high acid value resins are present in an amount of 10-40%, preferably 15-30% based on the weight of the varnish; and/or
   the vegetable-based solvents are present in an amount of 5-30%, preferably 10-20% based on the weight of the varnish.

3. The varnish of any preceding claim, wherein the epoxy ester and/or urethane modified alkyd are present in the varnish in an amount of 2-50 wt%, 4-40 wt%, or 8-30 wt%; and/or

   wherein the oxidatively curable materials comprise an epoxy ester; optionally wherein the epoxy ester is present in the varnish an amount of 2-40 wt%, 4-30 wt%, or 6-20 wt%; and/or
   wherein the oxidatively curable materials comprise a urethane modified alkyd; optionally wherein the urethane modified alkyd is present in the varnish an amount of 5-50 wt%, 15-40 wt%, or 25-30 wt%.

4. The varnish of any preceding claim, wherein the varnish has a viscosity at 25°C of 10-80 Pa·s or more preferably 25-60 Pa·s.

5. A water wipe security intaglio printing ink composition comprising a bio-renewable iso-alkane vegetable oil-based solvent, as oxidatively curable material an epoxy ester and/or a urethane modified alkyd, and a high acid value resin having an acid number of 100-160 mgKOH/g;
   wherein the ink is mineral oil-free.

6. The ink of claim 5, comprising 2-50 wt%, or more preferably 4-30 wt%, and most preferably 6-20 wt% of the bio-renewable iso-alkane vegetable oil-based solvent.

7. The ink of claim 5 or 6 or varnish of any of claims 1-4, wherein the bio-renewable iso-alkane vegetable oil-based solvent is obtained from 100% certified vegetable origin feedstocks; and/or

   wherein the bio-renewable iso-alkane vegetable oil-based solvent has a carbon chain length of C10-C20, or C13-C18; and/or
   wherein the bio-renewable iso-alkane vegetable oil-based solvent has an initial boiling point of 120-300°C, 135-250°C, or 200-250°C; and/or
   wherein the bio-renewable iso-alkane vegetable oil-based solvent has a final boiling point of 160-350°C, 180-350°C, 180-280°C, or 200-280°C; and/or
   wherein the difference between the initial and final boiling point of the bio-renewable iso-alkane vegetable oil-based solvent is less than 75°C, less than 50°C, or less than 35°C.

8. The ink of any of claims 5-7 or varnish of any of claims 1-4 or 7, comprising refined soya bean oil, refined linseed oil or tung oil; and/or

further comprising an oxidatively curable material selected from linseed or soybean based alkyd of long oil length, medium-oil-length, or short oil length where the acid used may be acid anhydride, phthalic acid, isophthalic acid, diolefinic acid or vinylformic acid and a polyvalent alcohol such as glycerol, pentaerythritol, ethylene glycol, trimethylolpropane or tetramethylolmethane; high acid value alkyd; long chain unsaturated polyacid such as fumaric acid modified vegetable oil and/or the drying oils such as tung oil and/or linseed oil.

9. The ink of any of claims 5-8, comprising 5-35 wt%, 9-25 wt%, or 12-22 wt% oxidatively curable material; and/or

wherein the epoxy ester and/or urethane modified alkyd are present in the ink in an amount of 1-20 wt%, 2-15 wt%, or 2.5-10 wt%; and/or
comprising as oxidatively curable material an epoxy ester; optionally wherein the epoxy ester is present in the ink in an amount of 1-20 wt%, 2-15 wt%, or 2.5-10 wt%; and/or
comprising as oxidatively curable material a urethane modified alkyd; optionally wherein the urethane modified alkyd is present in the ink in an amount of 1-20 wt%, 2.5-15 wt%, or 5-10 wt%.

10. The ink of any of claims 5-9 or varnish of any of claims 1-4, 7 or 8; wherein the high acid value resin is selected from high acid value rosin modified phenolic resin based on gum rosin, paraformaldehyde and/or fumaric acid and/or maleic anhydride and/or pentaerythritol and/or nonylphenol and/or octyl phenol; optionally wherein the acid number of the high acid value resin is 110-140 mgKOH/g.

11. The ink of any of claims 5-10, comprising 1-30 wt%, or 3-20 wt%, or 6-10 wt% high acid value resin.

12. The ink of any of claims 5-11 or varnish of any of claims 1-4, 7, 8 or 10, which is not classified as VOC under 2010/75/EC directive and/or contains less than 1% VOC under 2004/42/EC directive.

13. The ink of any of claims 5-12, wherein the ink has viscosity at 40°C of 10-20 Pa·s or 12-18 Pa·s.

14. The ink of any of claims 5-13 or varnish of any of claims 1-4, 7, 8, 10 or 12, which is substantially free of water.

15. The ink of any of claims 5-14, comprising a colorant; optionally wherein the colorant is an organic or inorganic dye or pigment; and/or comprising 1-15 wt%, or 2-10 wt%, or 3-7 wt% colorant.

16. A method of intaglio printing security documents such as banknotes and passports on paper, polymeric or hybrid substrate using an ink as defined in any of claims 5-15.

17. An intaglio ink comprising the varnish of any of claims 1-4, 7, 8, 10, 12 or 14, optionally further comprising additional bio renewable solvent.

18. A printed article obtained from intaglio printing the ink of any of claims 5-15 or 17, optionally wherein the article is a security document.

19. A method of making a varnish which is suitable for formulating intaglio inks, the method comprising obtaining a bio-renewable iso-alkane vegetable oil-based solvent from 100% certified vegetable oil feedstocks, and forming a varnish comprising the bio-renewable iso-alkane vegetable oil-based solvent, oxidatively curable materials, and high acid value resins having an acid number of 100-160 mgKOH/g, wherein the varnish is mineral oil-free; wherein the oxidatively curable materials comprise an epoxy ester and/or a urethane modified alkyd; optionally wherein the method further comprises:

(a) heating the oxidatively curable materials and high acid value resins under inert conditions to form a mixture, wherein said oxidatively curable materials comprise an epoxy ester and/or a urethane modified alkyd, and
(b) adding the bio-renewable iso-alkane vegetable oil-based solvent to the mixture.

20. A method of making a mineral oil-free intaglio ink, the method comprising making a varnish by following the method of claim 19, and making an intaglio ink comprising the varnish.

**Patentansprüche**

1. Lack, der zur Formulierung von Tiefdrucktinten geeignet ist, umfassend ein bio-erneuerbares Isoalkan-Lösungsmittel auf Pflanzenölbasis, oxidativ härtbare Materialien und Harze mit hohem Säurewert mit einer Säurezahl von 100-160 mgKOH/g, wobei der Lack mineralölfrei ist; wobei die oxidativ härtbaren Materialien einen Epoxyester und/oder ein urethanmodifiziertes Alkyd umfassen.

2. Lack nach einem der vorstehenden Ansprüche, wobei:

   die oxidativ härtbaren Materialien in einer Menge von 50-80 %, vorzugsweise 60-70 %, bezogen auf das Gewicht des Lacks vorhanden sind; und/oder
   die Harze mit hohem Säurewert in einer Menge von 10-40 %, vorzugsweise 15-30 %, bezogen auf das Gewicht des Lacks vorhanden sind; und/oder
   die Lösungsmittel auf pflanzlicher Basis in einer Menge von 5-30 %, vorzugsweise 10-20 %, bezogen auf das Gewicht des Lacks vorhanden sind.

3. Lack nach einem der vorhergehenden Ansprüche, wobei der Epoxyester und/oder das urethanmodifizierte Alkyd in dem Lack in einer Menge von 2-50 Gew.-%, 4-40 Gew.-% oder 8-30 Gew.-% vorhanden sind; und/oder

   wobei die oxidativ härtbaren Materialien einen Epoxyester umfassen; wobei der Epoxyester gegebenenfalls in dem Lack in einer Menge von 2-40 Gew.-%, 4-30 Gew.-% oder 6-20 Gew.-% vorhanden ist; und/oder
   wobei die oxidativ härtbaren Materialien ein urethanmodifiziertes Alkyd umfassen; wobei das urethanmodifizierte Alkyd gegebenenfalls in dem Lack in einer Menge von 5-50 Gew.-%, 15-40 Gew.-% oder 25-30 Gew.-% vorhanden ist.

4. Lack nach einem der vorhergehenden Ansprüche, wobei der Lack eine Viskosität bei 25 °C von 10-80 Pa s oder bevorzugter 25-60 Pa s aufweist.

5. Wasserwisch-Sicherheitstiefdrucktintenzusammensetzung umfassend ein bio-erneuerbares Isoalkan-Lösungsmittel auf Pflanzenölbasis, als oxidativ härtbares Material einen Epoxyester und/oder ein urethanmodifiziertes Alkyd und ein Harz mit hohem Säurewert mit einer Säurezahl von 100-160 mgKOH/g; wobei die Tinte mineralölfrei ist.

6. Tinte nach Anspruch 5, umfassend 2-50 Gew.-% oder bevorzugter 4-30 Gew.-% und höchst bevorzugt 6-20 Gew.-% an dem bio-erneuerbaren Isoalkan-Lösungsmittel auf Pflanzenölbasis.

7. Tinte nach Anspruch 5 oder 6 oder Lack nach einem der Ansprüche 1-4, wobei das bio-erneuerbaren Isoalkan-Lösungsmittel auf Pflanzenölbasis aus 100 % zertifizierten Rohstoffen mit pflanzlichem Ursprung erhalten ist; und/oder

   wobei das bio-erneuerbaren Isoalkan-Lösungsmittel auf Pflanzenölbasis eine Kohlenstoffkettenlänge von C10-C20 oder C13-C18 aufweist; und/oder
   wobei das bio-erneuerbaren Isoalkan-Lösungsmittel auf Pflanzenölbasis einen Anfangssiedepunkt von 120-300 °C, 135-250 °C oder 200-250 °C aufweist; und/oder
   wobei das bio-erneuerbaren Isoalkan-Lösungsmittel auf Pflanzenölbasis einen Endsiedepunkt von 160-350 °C, 180-350 °C, 180-280 °C oder 200-280 °C aufweist; und/oder
   wobei die Differenz zwischen dem Anfangs- und dem Endsiedepunkt des bio-erneuerbaren Isoalkan-Lösungsmittels auf Pflanzenölbasis kleiner als 75 °C, kleiner als 50 °C oder kleiner als 35 °C ist.

8. Tinte nach einem der Ansprüche 5-7 oder Lack nach einem der Ansprüche 1-4 oder 7, umfassend raffiniertes Sojabohnenöl, raffiniertes Leinsamenöl oder Tungöl; und/oder
   ferner umfassend ein oxidativ härtbares Material ausgewählt aus Alkyd mit langer Öllänge, mittlerer Öllänge oder kurzer Öllänge auf Leinsamen- oder Sojabohnenbasis, wobei die verwendete Säure Säureanhydrid, Phthalsäure, Isophthalsäure, Diolefinsäure oder Vinylameisensäure sein kann, und einem mehrwertigen Alkohol, wie z.B. Glycerol, Pentaerythrit, Ethylenglycol, Trimethylolpropan oder Tetramethylolmethan; Alkyd mit hohem Säurewert; langkettige ungesättigte Polysäure, wie z.B. fumarsäuremodifiziertes Pflanzenöl und/oder die Trocknungsöle wie z.B. Tungöl und/oder Leinsamenöl.

9. Tinte nach einem der Ansprüche 5-8, umfassend 5-35 Gew.-%, 9-25 Gew.-% oder 12-22 Gew.-% an oxidativ härtbarem Material; und/oder

wobei der Epoxyester und/oder das urethanmodifizierte Alkyd in der Tinte in einer Menge von 1-20 Gew.-%, 2-15 Gew.-% oder 2,5-10 Gew.-% vorhanden sind; und/oder
umfassend als oxidativ härtbares Material einen Epoxyester; wobei der Epoxyester gegebenenfalls in der Tinte in einer Menge von 1-20 Gew.-%, 2-15 Gew.-% oder 2,5-10 Gew.-% vorhanden ist; und/oder
umfassend als oxidativ härtbares Material ein urethanmodifiziertes Alkyd; wobei das urethanmodifizierte Alkyd gegebenenfalls in der Tinte in einer Menge von 1-20 Gew.-%, 2,5-15 Gew.-% oder 5-10 Gew.-% vorhanden ist.

10. Tinte nach einem der Ansprüche 5-9 oder Lack nach einem der Ansprüche 1-4, 7 oder 8; wobei das Harz mit hohem Säurewert ausgewählt ist aus kolophoniummodifiziertem Phenolharz mit hohem Säurewert auf der Basis von Gummiharz, Paraformaldehyd und/oder Fumarsäure und/oder Maleinsäureanhydrid und/oder Pentaerythrit und/oder Nonylphenol und/oder Octylphenol; wobei die Säurezahl des Harzes mit hohem Säurewert gegebenenfalls 110-140 mgKOH/g beträgt.

11. Tinte nach einem der Ansprüche 5-10, umfassend 1-30 Gew.-% oder 3-20 Gew.-% oder 6-10 Gew.-% an Harz mit hohem Säurewert.

12. Tinte nach einem der Ansprüche 5-11 oder Lack nach einem der Ansprüche 1-4, 7, 8 oder 10, die/der nicht als VOC gemäß Richtlinie 2010/75/EG eingestuft ist und/oder weniger als 1 % VOC gemäß Richtlinie 2004/42/EG enthält.

13. Tinte nach einem der Ansprüche 5-12, wobei die Tinte eine Viskosität bei 40 °C von 10-20 Pa s oder 12-18 Pa s aufweist.

14. Tinte nach einem der Ansprüche 5-13 oder Lack nach einem der Ansprüche 1-4, 7, 8, 10 oder 12, die/der im Wesentlichen frei von Wasser ist.

15. Tinte nach einem der Ansprüche 5-14, umfassend ein Farbmittel; wobei das Farbmittel gegebenenfalls ein organischer oder anorganischer Farbstoff oder Pigment ist; und/oder umfassend 1-15 Gew.-% oder 2-10 Gew.-% oder 3-7 Gew.-% Farbmittel.

16. Verfahren zum Tiefdruck von Sicherheitsdokumenten, wie z.B. Banknoten und Pässen, auf Papier-, Polymer- oder Hybridsubstrat unter Verwendung einer Tinte nach einem der Ansprüche 5-15.

17. Tiefdrucktinte umfassend den Lack nach einem der Ansprüche 1-4, 7, 8, 10, 12 oder 14, gegebenenfalls ferner umfassend zusätzliches bio-erneuerbares Lösungsmittel.

18. Bedruckter Gegenstand, erhalten durch Tiefdruck der Tinte nach einem der Ansprüche 5-15 oder 17, wobei der Gegenstand gegebenenfalls ein Sicherheitsdokument ist.

19. Verfahren zur Herstellung eines Lacks, der zur Formulierung von Tiefdrucktinten geeignet ist, wobei das Verfahren Erhalten eines bio-erneuerbaren Isoalkan-Lösungsmittels auf Pflanzenölbasis aus 100 % zertifizierten Pflanzenöl-Einsatzstoffen und Bilden eines Lacks umfasst, der das bio-erneuerbare Isoalkan-Lösungsmittel auf Pflanzenölbasis, oxidativ härtbare Materialien und Harze mit hohem Säurewert mit einer Säurezahl von 100-160 mgKOH/g umfasst, wobei der Lack mineralölfrei ist; wobei die oxidativ härtbaren Materialien einen Epoxyester und/oder ein urethanmodifiziertes Alkyd umfassen; wobei das Verfahren gegebenenfalls ferner umfasst:

(a) Erhitzen der oxidativ härtbaren Materialien und der Harze mit hohem Säurewert unter inerten Bedingungen, um ein Gemisch zu bilden, wobei die oxidativ härtbaren Materialien einen Epoxyester und/oder ein urethanmodifiziertes Alkyd umfassen, und
(b) Zugeben des bio-erneuerbaren Isoalkan-Lösungsmittels auf Pflanzenölbasis zu dem Gemisch.

20. Verfahren zur Herstellung einer mineralölfreien Tiefdrucktinte, wobei das Verfahren Herstellen eines Lacks nach dem Verfahren nach Anspruch 19 und Herstellen einer Tiefdrucktinte umfassend den Lack umfasst.

**Revendications**

1. Vernis qui convient pour la formulation d'encres taille-douce, comprenant un solvant bio-renouvelable à base d'huile végétale d'iso-alcane, des matières durcissables par oxydation et des résines à indice d'acide élevé ayant un indice d'acide de 100 à 160 mg de KOH/g, dans lequel le vernis est exempt d'huile minérale ;
dans lequel les matières durcissables par oxydation comprennent un époxy ester et/ou un alkyde modifié par uréthane.

2. Vernis selon une quelconque revendication précédente, dans lequel :

   les matières durcissables par oxydation sont présentes en une quantité de 50 à 80 %, de préférence de 60 à 70 % par rapport au poids du vernis ; et/ou
   les résines à indice d'acide élevé sont présentes en une quantité de 10 à 40 %, de préférence de 15 à 30 % par rapport au poids du vernis ; et/ou
   les solvants à base végétale sont présents en une quantité de 5 à 30 %, de préférence de 10 à 20 % par rapport au poids du vernis.

3. Vernis selon l'une quelconque des revendications précédentes, dans lequel l'époxy ester et/ou l'alkyde modifié par uréthane sont présents dans le vernis en une quantité de 2 à 50 % en poids, 4 à 40 % en poids ou 8 à 30 % en poids ; et/ou

   dans lequel les matières durcissables par oxydation comprennent un époxy ester ; éventuellement dans lequel l'époxy ester est présent dans le vernis en une quantité de 2 à 40 % en poids, 4 à 30 % en poids ou 6 à 20 % en poids ; et/ou
   dans lequel les matières durcissables par oxydation comprennent un alkyde modifié par uréthane ; éventuellement dans lequel l'alkyde modifié par uréthane est présent dans le vernis en une quantité de 5 à 50 % en poids, 15 à 40 % en poids ou 25 à 30 % en poids.

4. Vernis selon l'une quelconque des revendications précédentes, dans lequel le vernis a une viscosité à 25 °C de 10 à 80 Pa.s ou plus préférablement de 25 à 60 Pa.s.

5. Composition d'encre d'impression taille-douce de sécurité pour essuyage à l'eau comprenant un solvant bio-renouvelable à base d'huile végétale d'iso-alcane, en tant que matière durcissable par oxydation, un époxy ester et/ou un alkyde modifié par uréthane, et une résine à indice d'acide élevé ayant un indice d'acide de 100 à 160 mg de KOH/g ;
dans laquelle l'encre est exempte d'huile minérale.

6. Encre selon la revendication 5, comprenant 2 à 50 % en poids, ou plus préférablement 4 à 30 % en poids, et le plus préférablement, 6 à 20 % en poids du solvant bio-renouvelable à base d'huile végétale d'iso-alcane.

7. Encre selon la revendication 5 ou 6 ou vernis selon l'une quelconque des revendications 1 à 4, dans laquelle/lequel le solvant bio-renouvelable à base d'huile végétale d'iso-alcane est obtenu à partir de matières premières d'origine végétale certifiée à 100 % ; et/ou

   dans laquelle/lequel le solvant bio-renouvelable à base d'huile végétale d'iso-alcane a une longueur de chaîne carbonée de C10-C20 ou C13-C18 ; et/ou
   dans laquelle/lequel le solvant bio-renouvelable à base d'huile végétale d'iso-alcane a un point d'ébullition initial de 120 à 300 °C, 135 à 250 °C ou 200 à 250 °C ; et/ou
   dans laquelle/lequel le solvant bio-renouvelable à base d'huile végétale d'iso-alcane a un point d'ébullition final de 160 à 350 °C, 180 à 350 °C, 180 à 280 °C ou 200 à 280 °C ; et/ou
   dans laquelle/lequel la différence entre le point d'ébullition initial et le point d'ébullition final du solvant bio-renouvelable à base d'huile végétale d'isoalcane est inférieure à 75 °C, inférieure à 50 °C ou inférieure à 35 °C.

8. Encre selon l'une quelconque des revendications 5 à 7 ou vernis selon l'une quelconque des revendications 1 à 4 ou 7, comprenant de l'huile de soja raffinée, de l'huile de lin raffinée ou de l'huile de tung ; et/ou comprenant en outre une matière durcissable par oxydation choisie parmi un alkyde à base de graines de lin ou de soja de longueur d'huile longue, de longueur d'huile moyenne ou de longueur d'huile courte où l'acide utilisé peut être un anhydride d'acide, l'acide phtalique, l'acide isophtalique, l'acide dioléfinique ou l'acide vinylformique et un alcool polyvalent tel que le glycérol, le pentaérythritol, l'éthylène glycol, le triméthylolpropane ou le tétraméthylolméthane ; un alkyde à indice d'acide élevé ; un polyacide insaturé à longue chaîne tel qu'une huile végétale modifiée par de l'acide fumarique et/ou les huiles siccatives telles que l'huile de tung et/ou l'huile de lin.

9. Encre selon l'une quelconque des revendications 5 à 8, comprenant 5 à 35 % en poids, 9 à 25 % en poids ou 12 à 22 % en poids d'une matière durcissable par oxydation ; et/ou

dans laquelle l'époxy ester et/ou l'alkyde modifié par uréthane sont présents dans l'encre en une quantité de 1 à 20 % en poids, 2 à 15 % en poids ou 2,5 à 10 % en poids ; et/ou

comprenant en tant que matière durcissable par oxydation un époxy ester ; éventuellement dans laquelle l'époxy ester est présent dans l'encre en une quantité de 1 à 20 % en poids, 2 à 15 % en poids ou 2,5 à 10 % en poids ; et/ou comprenant comme matière durcissable par oxydation un alkyde modifié par uréthane ; éventuellement, dans laquelle l'alkyde modifié par uréthane est présent dans l'encre en une quantité de 1 à 20 % en poids, 2,5 à 15 % en poids ou 5 à 10 % en poids.

10. Encre selon l'une quelconque des revendications 5 à 9 ou vernis selon l'une quelconque des revendications 1 à 4, 7 ou 8 ; dans laquelle/lequel la résine à indice d'acide élevé est choisie parmi une résine phénolique modifiée par une colophane à indice d'acide élevé à base de gomme-colophane, le paraformaldéhyde et/ou l'acide fumarique et/ou l'anhydride maléique et/ou le pentaérythritol et/ou le nonylphénol et/ou l'octylphénol ; éventuellement dans laquelle l'indice d'acide de la résine à indice d'acide élevé est de 110 à 140 mg de KOH/g.

11. Encre selon l'une quelconque des revendications 5 à 10, comprenant 1 à 30 % en poids, ou 3 à 20 % en poids, ou 6 à 10 % en poids de résine à indice d'acide élevé.

12. Encre selon l'une quelconque des revendications 5 à 11 ou vernis selon l'une quelconque des revendications 1 à 4, 7, 8 ou 10, qui n'est pas classé(e) comme COV selon la directive 2010/75/CE et/ou contient moins de 1 % de COV selon la directive 2004/42/CE.

13. Encre selon l'une quelconque des revendications 5 à 12, dans laquelle l'encre a une viscosité à 40 °C de 10 à 20 Pa.s ou 12 à 18 Pa.s.

14. Encre selon l'une quelconque des revendications 5 à 13 ou vernis selon l'une quelconque des revendications 1 à 4, 7, 8, 10 ou 12, qui est sensiblement exempt (e) d'eau.

15. Encre selon l'une quelconque des revendications 5 à 14, comprenant une matière colorante ; éventuellement dans laquelle la matière colorante est un colorant ou pigment organique ou inorganique ; et/ou comprenant 1 à 15 % en poids, ou 2 à 10 % en poids, ou 3 à 7 % en poids de matière colorante.

16. Procédé d'impression taille-douce de documents de sécurité tels que des billets de banque et des passeports sur du papier, un substrat polymère ou hybride en utilisant une encre telle que définie dans l'une quelconque des revendications 5 à 15.

17. Encre taille-douce comprenant le vernis selon l'une quelconque des revendications 1 à 4, 7, 8, 10, 12 ou 14, comprenant en outre éventuellement un solvant bio-renouvelable supplémentaire.

18. Article imprimé obtenu à partir de l'impression taille-douce de l'encre selon l'une quelconque des revendications 5 à 15 ou 17, dans lequel éventuellement l'article est un document de sécurité.

19. Procédé de fabrication d'un vernis qui convient pour la formulation d'encres taille-douce, le procédé comprenant l'obtention d'un solvant bio-renouvelable à base d'huile végétale d'iso-alcane à partir de charges d'alimentation d'huile végétale certifiées à 100 %, et la formation d'un vernis comprenant le solvant bio-renouvelable à base d'huile végétale d'iso-alcane, des matières durcissables par oxydation, et des résines à indice d'acide élevé ayant un indice d'acide de 100 à 160 mg de KOH/g, dans lequel le vernis est exempt d'huile minérale ;
dans lequel les matières durcissables par oxydation comprennent un époxy ester et/ou un alkyde modifié par uréthane ; éventuellement dans lequel le procédé comprend en outre :

(a) le chauffage des matières durcissables par oxydation et des résines à indice d'acide élevé dans des conditions inertes pour former un mélange, dans lequel lesdites matières durcissables par oxydation comprennent un époxy ester et/ou un alkyde modifié par uréthane, et

(b) l'ajout au mélange du solvant bio-renouvelable à base d'huile végétale d'iso-alcane.

20. Procédé de fabrication d'une encre taille-douce exempte d'huile minérale, le procédé comprenant la fabrication d'un vernis en suivant le procédé selon la revendication 19, et la fabrication d'une encre taille-douce comprenant le vernis.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5467556 B
- WO 2015024966 A
- US 6815474 B2
- CN 101386724 A
- CN 101250352
- US 5569701 A
- EP 0745652 A2
- WO 2019129625 A1
- US 4404251 A
- KR 1020160080339 A
- CN 101250352 A
- WO 2015068290 A1